# EUROPEAN PATENT SPECIFICATION

(11) **EP 4 443 629 B1**
(45) Date of publication and mention of the grant of the patent: **25.03.2026**
(21) Application number: 24185161.7
(22) Date of filing: 19.08.2020
(51) Int. Cl.: H01M 50/20, H01M 10/658, H01M 10/647, H01M 50/209, H01M 50/224, H01M 50/244, H01M 50/262, H01M 50/367

(54) **BATTERY MODULE**
BATTERIEMODUL
MODULE DE BATTERIE

(30) Priority: 18.12.2019 KR 20190169535
(43) Date of publication of application: 09.10.2024
(62) Divisional of application: 20902383.7
(73) Proprietor: LG Energy Solution, Ltd., Seoul 07335 (KR)
(72) Inventor: SHIN, Eun Gyu, Daejeon 34122 (KR); YOO, Jae Min, Daejeon 34122 (KR); MOON, Jeong Oh, Daejeon 34122 (KR); LEE, Yoon Koo, Daejeon 34122 (KR)
(74) Representative: Plasseraud IP

(56) References cited:
- WO-A1-2016/204489
- JP-A- 2019 067 583
- KR-A- 20190 066 731
- US-A1- 2013 084 480
- US-A1- 2019 181 405

## Description

### [Technical Field]

This application claims the benefit of priority to Korean Patent Application No. 2019-0169535 filed on December 18, 2019.

The present invention relates to a battery module including a plurality of cell module assemblies, each of which has an individual housing, and module plates.

### [Background Art]

With technological development of mobile devices, such as mobile phones, laptop computers, camcorders, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), and a plug-in hybrid electric vehicle (P-HEV), and therefore there is an increasing necessity for development of secondary batteries.

There are a lithium ion battery, a lithium polymer battery, a nickel-cadmium battery, a nickel-hydride battery, and a nickel-zinc battery as secondary batteries that are widely used at present. The operating voltage of a unit secondary battery cell, i.e. a unit battery cell, is about 2.0V to 5.0V. In the case in which output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. In general, a battery pack is manufactured using at least one battery module by adding an additional component.

KR20190066731 according to its title states a battery module of cell edge direct cooling scheme and battery pack comprising same.

US2013/084480 according to its title states a battery module.

JP 2019/067583 A, according to its title, describes a power storage module and a power storage pack.

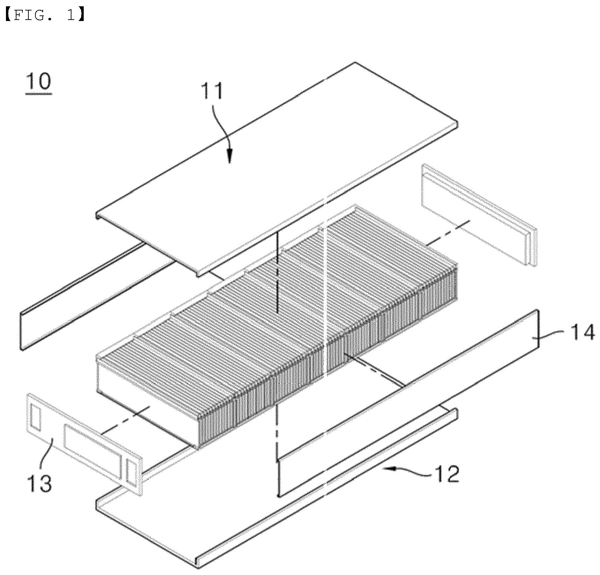

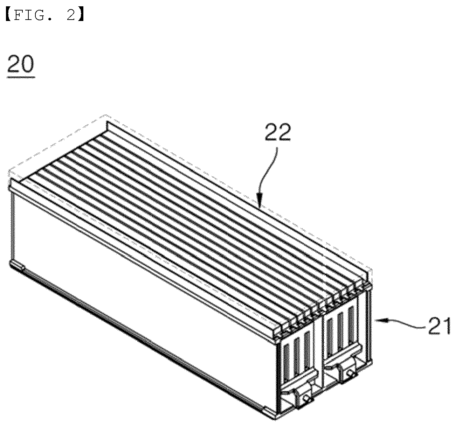

A conventional battery module will be described with reference to FIGS. 1 and 2. In general, a plurality of battery cells is received in a cartridge 22 generally made of a plastic material without a separate housing to form a cell module assembly 20. At least one cell module assembly 20, formed as described above, is received in a module housing constituted by an upper module plate 11, a lower module plate 12, and side module plates 13 and 14 to manufacture a battery module 10.

For this battery module, however, several cell module assemblies are arranged and mounted in a single space defined in the module housing. When an event, such as fire breakout, occurs in a specific cell module assembly, therefore, the event propagates to an adjacent cell module assembly, whereby the adjacent cell module assembly may also be damaged.

### [Disclosure]

### [Technical Problem]

The present invention has been made in view of the above problems, and it is an object of the present invention to provide a battery module configured such that each cell module assembly is received in an individual housing in the state in which a module housing is removed from the battery module.

### [Technical Solution]

In order to accomplish the above object, a battery module according to the present invention includes a plurality of cell module assemblies and a pair of module plates, wherein each of the cell module assemblies includes a plurality of battery cells and an individual housing configured to receive the plurality of battery cells, the individual housing includes an upper plate located at the upper part of the plurality of battery cells, a lower plate located at the lower part of the plurality of battery cells, and two side plates located at opposite side surfaces of the plurality of battery cells, the two side plates being configured to connect the upper plate and the lower plate to each other, excluding the front and the rear of the plurality of battery cells, from which electrode leads protrude, and each of the pair of module plates has a size that covers a corresponding one of the entire front and the entire rear of the plurality of cell module assemblies, from which the electrode leads protrude, the pair of module plates being located respectively at the front and the rear of the plurality of cell module assemblies so as to be fastened to the plurality of cell module assemblies.

Also, in the battery module according to the present invention, distal end portions of the upper plate, the lower plate, and the side plates of the individual housing are formed so as to overlap each other when the upper plate and the lower plate are coupled to the side plates in order to improve sealability between the plates.

In addition, the battery module according to the present invention may further include a busbar unit located between the plurality of battery cells and each of the module plates, the busbar unit being electrically connected to the electrode leads.

Also, in the battery module according to the present invention, each of the upper plate, the lower plate, and the side plates of the individual housing may be provided with a fastening portion for coupling with the other plates.

Also, in the battery module according to the present invention, a space portion may be formed between each of the side plates of the individual housing and a side plate of a neighboring individual housing.

Also, in the battery module according to the present invention, an insulating material configured to inhibit heat transfer between the cell module assemblies may be further added to the space portion.

Also, in the battery module according to the present invention, a flame retardant material configured to inhibit flame transfer between the cell module assemblies may be further added to the space portion.

Also, in the battery module according to the present invention, the upper plate and the lower plate of the individual housing may be coupled to the side plates by mechanical fastening or welding.

Also, in the battery module according to the present invention, each of the module plates may include a fastening portion for coupling with the individual housing and a venting portion configured to discharge venting gas.

Also, in the battery module according to the present invention, each of the module plates may be coupled to the cell module assemblies by mechanical fastening.

Also, in the battery module according to the present invention, the individual housing may be made of a metal material.

In addition, a battery pack according to the present invention includes at least one battery module.

### [Advantageous effects]

A battery module according to the present invention has an advantage in that each cell module assembly is received in an individual housing, and therefore when an event, such as fire breakout, occurs in a specific cell module assembly, the event is prevented from propagating to an adjacent cell module assembly.

In addition, the battery module according to the present invention has advantages in that individual housings are fastened to each other in the state of being spaced apart from each other to form a space portion, whereby heat transfer is prevented, and in that an insulating material or a flame retardant material may be further added to the space portion.

### [Description of Drawings]

FIG. 1 is an exploded perspective view of a conventional battery module.
FIG. 2 is a schematic view of a conventional cell module assembly.
FIG. 3 is a schematic view showing a battery module according to the present invention.
FIG. 4 is an exploded perspective view of the battery module according to the present invention.
FIG. 5 is an exploded perspective view of an individual housing according to the present invention.
FIG. 6 is a sectional view showing a coupling portion between an upper/lower plate and a side plate in the individual housing according to the present invention.
FIG. 7 is a schematic view showing a module plate according to the present invention.
FIG. 8 is an exploded perspective view of a busbar unit according to the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module according to the present invention will be described with reference to the accompanying drawings.

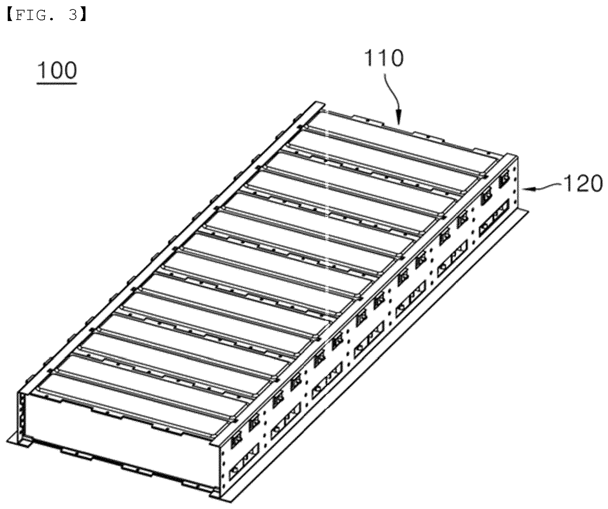

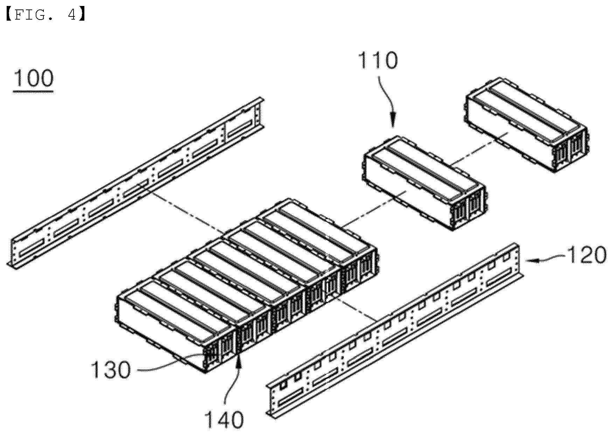

FIG. 3 is a schematic view of a battery module according to a first preferred embodiment of the present invention, and FIG. 4 is an exploded perspective view of the battery module.

The battery module 100 will be described with reference to FIGS. 3 and 4. First, the battery module 100 includes at least one cell module assembly (CMA) having a plurality of battery cells received in an individual housing 110 and module plates 120 configured to cover the front and the rear of the cell module assembly, at which electrode leads protrude from the battery cells in the cell module assembly. In addition, the battery module 100 further includes a busbar unit 130 provided between the cell module assembly and each of the module plates, the busbar unit being configured to electrically connect the electrode leads to each other. Also, in the battery module 100, a space portion 140 is formed between adjacent individual housings 110.

Each of the battery cells used in the battery module 100 according to the present invention may be constituted by a secondary battery. Based on the kind and shape of a sheathing member, the secondary battery may be generally classified as a pouch-shaped secondary battery, a cylindrical secondary battery, or a prismatic secondary battery. Preferably, a pouch-shaped secondary battery may be used as the battery cell according to the present invention.

The pouch-shaped secondary battery may include an electrode assembly, a battery case configured to receive the electrode assembly, and a pair of electrode leads protruding forwards and rearwards from the battery case.

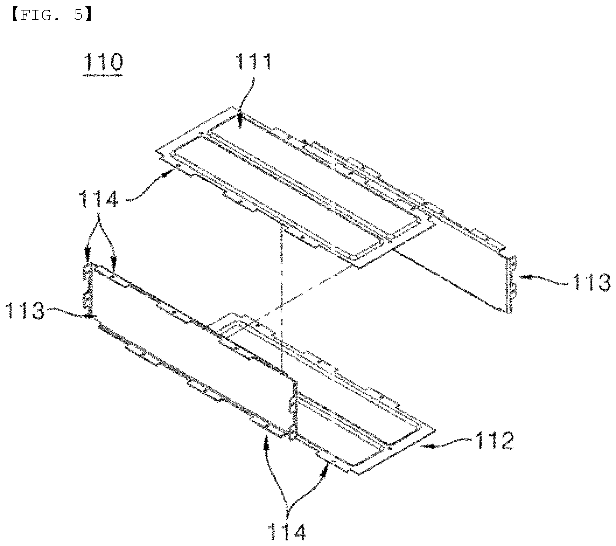

The individual housing 110 will be described in detail with reference to FIG. 5. The individual housing 110 includes an upper plate 111, a lower plate 112, and side plates 113 located at the upper part, the lower part, and the side surfaces of the cell module assembly, respectively. Each of the plates 111, 112, and 113 is provided with a fastening portion 114 for coupling with the other plates. Fastening between the plates 111, 112, and 113 is achieved through the fastening portions 114. Any of various conventional methods, such as mechanical fastening using bolts or welding, may be used as a fastening method.

Also, in the battery module 100 according to the present invention, the fastening portions 114 formed at the side plates 113 of adjacent individual housings 110 so as to correspond to each other are fastened to each other using the mechanical fastening or welding method, whereby the individual housings 110 are connected to each other. As shown in FIG. 4, the space portion 140 is formed between the side plates of the individual housings 110 connected to each other, as described above. The space portion itself may serve to inhibit heat transfer between the individual housings 110. In addition, an insulating material configured to block heat transfer or a flame retardant material configured to prevent propagation of flames at the time of fire breakout may be inserted into the space portion 140.

In addition, each of the plates 111, 112, and 113 of the individual housing 110 may be made of a metal material. The plates 111, 112, and 113, each of which is made of a metal material, as described above, are coupled to each other to form the individual housing. Consequently, the individual housing has higher mechanical strength than a cartridge used in a conventional battery module, which is generally made of a plastic material.

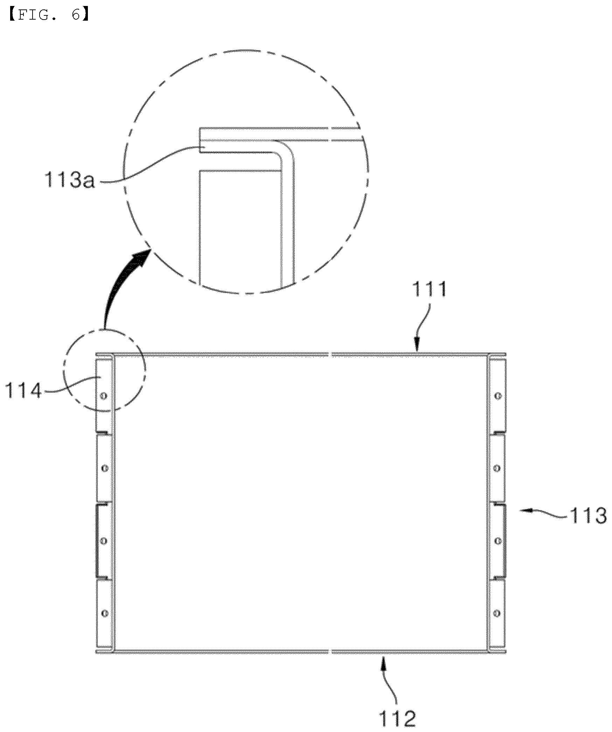

Coupling of the individual housing through the plates 111, 112, and 113 will be described in more detail with reference to FIG. 6. A distal end portion 113a of each of the side plates 113 configured to abut a corresponding one of the upper plate 111 and the lower plate 112 at the time of fastening is bent so as to overlap a distal end portion of the corresponding one of the upper plate 111 and the lower plate 112, whereby sealability of the individual housing 110 after fastening is improved. In the case in which venting gas is generated from one or more battery cells in a specific cell module assembly, therefore, it is possible to guide the venting gas to the front and the rear of the individual housing 110, at which the plates 111, 112, and 113 are not located, since sealability of the individual housing 110 is improved, as described above. As a result, even though venting gas is generated in a specific cell module assembly, a cell module assembly adjacent thereto is not affected, whereby it is possible to improve reliability of the battery module.

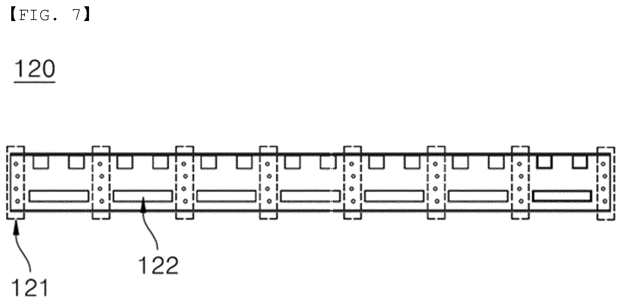

Meanwhile, the module plate 120 will be described in detail with reference to FIG. 7. The module plate 120 includes an assembly portion 121 for assembly with the individual housing 110 and a venting portion 122 configured to discharge venting gas, and has a size that covers the entire front and the entire rear of the cell module assemblies located in the battery module. The module plate 120 and the individual housing 110 may be assembled by mechanical coupling between the assembly portion 121 of the module plate 120 and the fastening portion 114 of the individual housing 110 using bolts. The module plate 120, assembled as described above, may also serve to additionally fix the individual housings 110. Since assembly is achieved by mechanical coupling, rather than welding, it is possible to prevent the battery cells in the cell module assembly from being damaged by heat generated at the time of welding. Furthermore, even in the case in which a specific cell module assembly malfunctions, the module plate 120 may be easily separated from the individual housing coupled thereto in order to repair or remove the defective cell module assembly.

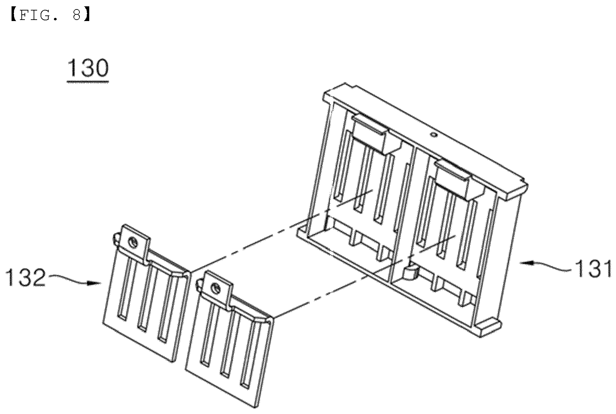

The busbar unit 130 will be described in detail with reference to FIG. 8. The busbar unit 130 includes a busbar body 131 and a busbar frame 132. Here, the busbar body 131 serves to electrically connect the electrode leads of the battery cells to each other, and the busbar frame 132 serves to fix and support the busbar body 131.

Although the specific details of the present invention have been described in detail, those skilled in the art will appreciate that the detailed description thereof discloses only preferred embodiments of the present invention that is set out in the appended claims. Accordingly, those skilled in the art will appreciate that various changes and modifications falling within the scope of the appended claims are possible.

### (Description of Reference Symbols)

10: Battery module
11: Upper module plate
12: Lower module plate
13, 14: Side module plates
20: Cell module assembly
21: Busbar unit
22: Cartridge
100: Battery module
110: Individual housing
111: Upper plate
112: Lower plate
113: Side plate
113a: Distal end portion of side plate
114: Fastening portion
120: Module plate
121: Assembly portion
122: Venting portion
130: Busbar unit
131: Busbar body
132: Busbar frame
140: Space portion

## Claims

1. A battery module (100), comprising:
a plurality of cell module assemblies; and
a pair of module plates (120),
wherein each of the cell module assemblies comprises a plurality of battery cells and an individual housing (110) configured to receive the plurality of battery cells,
wherein the individual housing (110) comprises:
an upper plate (111) located at an upper part of the plurality of battery cells,
a lower plate (112) located at a lower part of the plurality of battery cells, and
two side plates (113) located at opposite side surfaces of the plurality of battery cells, the two side plates (113) being configured to connect the upper plate (111) and the lower plate (112) to each other, excluding a front and a rear of the plurality of battery cells, from which electrode leads protrude,
**characterized in that** distal end portions of the upper plate (111), distal end portions of the lower plate (112), and bent distal end portions (113a) of the side plates (113) of the individual housing (110) are formed so as to overlap each other, the distal end portions (113a) of the side plates (113) abutting the distal end portions of the upper plate (111) and lower plate (112), when the upper plate and the lower plate are coupled to the side plates in order to improve sealability between the plates,
and **in that** each of the pair of module plates (120) has a size that covers a corresponding one of an entire front and an entire rear of the plurality of cell module assemblies, from which electrode leads protrude, the pair of module plates (120) being located respectively at the front and the rear of the plurality of cell module assemblies so as to be fastened to the plurality of cell module assemblies.

2. The battery (100) according to claim 1, further comprising a busbar unit (130) located between the plurality of battery cells and each of the module plates (120), the busbar unit (130) being electrically connected to the electrode leads.

3. The battery module (100) according to claim 1, wherein each of the upper plate (111), the lower plate (112), and the side plates (113) is provided with a fastening portion for coupling with the other plates.

4. The battery module (100) according to claim 1, wherein a space portion (140) is formed between each of the side plates (113) of the individual housing (110) and a side plate (113) of a neighboring individual housing, and wherein an insulating material configured to inhibit heat transfer between the cell module assemblies is further added to the space portion (140).

5. The battery module according (100) to claim 1, wherein a space portion (140) is formed between each of the side plates (113) of the individual housing (110) and a side plate (113) of a neighboring individual housing, wherein a flame retardant material configured to inhibit flame transfer between the cell module assemblies is further added to the space portion (140).

6. The battery (100) according to claim 1, wherein the upper plate (111) and the lower plate (112) of the individual housing (110) are coupled to the side plates by mechanical fastening or welding.

7. The battery (100) according to claim 1, wherein each of the module plates (120) comprises a fastening portion (121) for coupling with the individual housing (110) and a venting portion (122) configured to discharge venting gas.

8. The battery module (100) according to claim 1, wherein each of the module plates is coupled to the cell module assemblies by mechanical fastening.

9. The battery module (100) according to claim 1, wherein the individual housing (110) is made of a metal material.

10. A battery pack comprising the battery module (100) according to any one of claims 1 to 9.

## Patentansprüche

1. Batteriemodul (100), umfassend:
eine Mehrzahl von Zellenmodulanordnungen; und
ein Paar von Modulplatten (120),
wobei jede der Zellenmodulanordnungen eine Mehrzahl von Batteriezellen und ein individuelles Gehäuse **(110)** umfasst, welches dazu eingerichtet ist, die Mehrzahl von Batteriezellen aufzunehmen,
wobei das individuelle Gehäuse **(110)** umfasst:
eine obere Platte (111), welche an einem oberen Teil der Mehrzahl von Batteriezellen angeordnet ist,
eine untere Platte (112), welche an einem unteren Teil der Mehrzahl von Batteriezellen angeordnet ist, und
zwei Seitenplatten (113), welche an entgegengesetzten Seitenflächen der Mehrzahl von Batteriezellen angeordnet sind, wobei die zwei Seitenplatten (113) dazu eingerichtet sind, die obere Platte (111) und die untere Platte (112) miteinander zu verbinden, mit Ausnahme einer Vorderseite und einer Hinterseite der Mehrzahl von Batteriezellen, von welchen Elektrodenleitungen vorstehen,
**dadurch gekennzeichnet, dass** distale Endabschnitte (113a) der oberen Platte (113), distale Endabschnitte der unteren Platte (112) und gebogene distale Endabschnitte der Seitenplatten (113) des individuellen Gehäuses (110) derart gebildet sind, dass sie einander überlappen, wobei die distalen Endabschnitte der Seitenplatten (113) an den distalen Endabschnitten der oberen Platte (111) und der unteren Platte (112) anliegen, wenn die obere Platte und die untere Platte mit den Seitenplatten gekoppelt sind, um eine Dichtfähigkeit zwischen den Platten zu verbessern,
und dass jede des Paars von Modulplatten (120) eine Größe aufweist, welche eine entsprechende einer gesamten Vorderseite und einer gesamten Rückseite der Mehrzahl von Zellenmodulanordnungen abdeckt, von welcher Elektrodenleitungen vorstehen, wobei das Paar von Modulplatten (120) derart an der Vorderseite bzw. der Rückseite der Mehrzahl von Zellenmodulanordnungen angeordnet ist, dass es an der Mehrzahl von Zellenmodulanordnungen befestigt ist.

2. Batteriemodul (100) nach Anspruch 1, ferner umfassend eine Sammelschieneneinheit (130), welche zwischen der Mehrzahl von Batteriezellen und jeder der Modulplatten (120) angeordnet ist, wobei die Sammelschieneneinheit (130) elektrisch mit den Elektrodenleitungen verbunden ist.

3. Batteriemodul (100) nach Anspruch 1, wobei jede aus der oberen Platte (111), der unteren Platte (112) und den Seitenplatten (113) mit einem Befestigungsabschnitt zur Kopplung mit den anderen Platten bereitgestellt ist.

4. Batteriemodul (100) nach Anspruch 1, wobei ein Raumabschnitt (140) zwischen jeder der Seitenplatten (113) des individuellen Gehäuses (110) und einer Seitenplatte (113) eines benachbarten individuellen Gehäuses (110) gebildet ist, und wobei ein isolierendes Material, welches dazu eingerichtet ist, eine Wärmeübertragung zwischen den Zellenmodulanordnungen zu hemmen, ferner in dem Raumabschnitt (140) hinzugefügt ist.

5. Batteriemodul (100) nach Anspruch 1, wobei ein Raumabschnitt (140) zwischen jeder der Seitenplatten (113) des individuellen Gehäuses (110) und einer Seitenplatte (113) eines benachbarten individuellen Gehäuses (110) gebildet ist, und wobei ein flammenhemmendes Material, welches dazu eingerichtet ist, eine Flammenübertragung zwischen den Zellenmodulanordnungen zu hemmen, ferner in dem Raumabschnitt (140) hinzugefügt ist.

6. Batteriemodul (100) nach Anspruch 1, wobei die obere Platte (111) und die untere Platte (112) des individuellen Gehäuses (110) durch eine mechanische Befestigung oder durch Schweißen mit den Seitenplatten gekoppelt sind.

7. Batteriemodul (100) nach Anspruch 1, wobei jede der Modulplatten (120) einen Befestigungsabschnitt (121) zur Kopplung mit dem individuellen Gehäuse (110) und einen Entlüftungsabschnitt (122) umfasst, welcher dazu eingerichtet ist, ein Entlüftungsgas abzuführen.

8. Batteriemodul (100) nach Anspruch 1, wobei jede der Modulplatten durch eine mechanische Befestigung mit den Zellenmodulanordnungen gekoppelt ist.

9. Batteriemodul (100) nach Anspruch 1, wobei das individuelle Gehäuse (110) aus einem metallischen Material hergestellt ist.

10. Batteriepack, umfassend das Batteriemodul (100) nach einem der Ansprüche 1 bis 9.

## Revendications

1. Module de batterie (100), comprenant :
une pluralité d'ensembles modules de cellules ; et
une paire de plaques de module (120),
dans lequel chacun des ensembles modules de cellules comprend une pluralité de cellules de batterie et un boîtier individuel (110) configuré pour recevoir la pluralité de cellules de batterie ;
dans lequel le boîtier individuel (110) comprend :
une plaque supérieure (111) située au niveau d'une partie supérieure de la pluralité de cellules de batterie,
une plaque inférieure (112) située au niveau d'une partie inférieure de la pluralité de cellules, et
deux plaques latérales (113) situées au niveau de surfaces latérales opposées de la pluralité de cellules de batterie, les deux plaques latérales (113) étant configurées pour relier la plaque supérieure (111) et la plaque inférieure (112) l'une à l'autre, à l'exception d'un avant et d'un arrière de la pluralité de cellules de batterie, à partir desquels des languettes d'électrode font saillie,
**caractérisé en ce que** des parties d'extrémité distale (113a) de la plaque supérieure (113), des parties d'extrémité distales de la plaque inférieure (112) et des parties d'extrémité distales pliées des plaques latérales (113) du boîtier individuel (110) sont formées de façon à se chevaucher les unes les autres lorsque la plaque supérieure et la plaque inférieure sont couplées aux plaques latérales afin d'améliorer l'étanchéité entre les plaques,
et **en ce que** chacune de la paire de plaques de module (120) a une taille qui recouvre un élément correspondant parmi un avant entier et un arrière entier de la pluralité d'ensembles modules de cellules, à partir desquels des languettes d'électrode font saillie, la paire de plaques de module étant situées respectivement à l'avant et à l'arrière de la pluralité d'ensembles modules de cellules de façon à être fixées à la pluralité d'ensembles modules de cellules.

2. Module de batterie (100) selon la revendication 1, comprenant en outre une unité de barre omnibus (130) située entre la pluralité de cellules de batterie et chacune des plaques de module (120), l'unité de barre omnibus (130) étant électriquement connectée aux languettes d'électrode.

3. Module de batterie (100) selon la revendication 1, dans lequel chacune de la plaque supérieure (111), de la plaque inférieure (112) et des plaques latérales (113) est dotée d'une partie de fixation pour être couplée aux autres plaques.

4. Module de batterie (100) selon la revendication 1, dans lequel une portion espace (140) est formée entre chacune des plaques latérales (113) du boîtier individuel (110) et une plaque latérale (113) d'un boîtier individuel voisin (110), et dans lequel un matériau isolant configuré pour empêcher le transfert de chaleur entre les ensembles modules de cellules est en outre ajouté à la portion d'espace (140).

5. Module de batterie (100) selon la revendication 1, dans lequel une portion espace (140) est formée entre chacune des plaques latérales (113) du boîtier individuel (110) et une plaque latérale (113) d'un boîtier individuel voisin (110), et dans lequel un matériau ignifuge configuré pour empêcher un transfert de flamme entre les ensembles modules de cellules est en outre ajouté à la portion d'espace (140).

6. Module de batterie (100) selon la revendication 1, dans lequel la plaque supérieure (111) et la plaque inférieure (112) du boîtier individuel (110) sont couplées aux plaques latérales par fixation mécanique ou soudage.

7. Module de batterie (100) selon la revendication 1, dans lequel chacune des plaques de module (120) comprend une partie de fixation (121) pour pouvoir être couplée au boîtier individuel (110) et une partie de ventilation (122) configurée pour évacuer un gaz de ventilation.

8. Module de batterie (100) selon la revendication 1, dans lequel chacune des plaques de module est couplée aux ensembles modules de cellules par fixation mécanique.

9. Module de batterie (100) selon la revendication 1, dans lequel le boîtier individuel (110) est constitué d'un matériau métallique.

10. Bloc-batterie comprenant le module de batterie (100) selon l'une quelconque des revendications 1 à 9.
